# EUROPEAN PATENT APPLICATION

(11) **EP 1 639 929 A1**
(43) Date of publication of application: **29.03.2006**
(21) Application number: 04011001.7
(22) Date of filing: 07.05.2004
(51) Int. Cl.: A47J 43/14

(54) **Egg opener**

(71) Applicant: Sultana, Dominic, Xaghra, Gozo (MT); Attard, Joe, Victoria, Gozo (MT)
(72) Inventor: Sultana, Dominic, Xaghra, Gozo (MT); Attard, Joe, Victoria, Gozo (MT)
(74) Representative: Schütte, Hartmut

(57) **Abstract**

Egg Opener (1) with a supporting means (2) comprising two supporting members (3,4) and a spring means (7). The supporting members are pivotable between a resting position and a working position and the spring means leads the supporting means into the resting position.

## Description

The present invention relates to a device for opening eggs.

In the prior art there are known tools for opening of eggs. GB 255,767 discloses an egg opener comprising a supporting member with two supporting parts for receiving an egg to be opened. After placing an egg on the device it can be slightly tapped upon a solid object. Teeth provided at the supporting parts will then be forced into the egg. By moving both parts away from each other the egg is opened. A disadvantage of this known device is that both hands must be used.

From US 2,612,921 an egg opener is known comprising a supporting member with two supporting plates to receive an egg to be opened. The inner edges are provided with piercing means. A spring is provided urging the supporting plates together in a contacting position. The person using such a device will hold in the first hand the handle of the device and with the second hand the person will tap an egg on the piercing flanges to form a crack. By pressing with the first hand a mechanism at the handle the supporting plates are urged away from each other and the egg is opened. An unfavourable aspect is that the person operating the device needs both hands and that the structure is complicated.

### New Device

It is therefore an object of the present invention to provide a device for opening of fresh eggs that is easy to use and that can be operated with one hand. A further object of the invention is to provide an egg opener with a simple structure.

This object is achieved by a device with the features of claim 1. Further preferred embodiments of the invention comprise the subject matter of the subclaims.

An egg opener according to claim 1 comprises supporting means with at least two supporting members and at least a spring means. The supporting members function on pivot between a resting position, where it is possible to put an egg on the supporting means and a working position, suitable for opening an egg. The spring means brings around the supporting means into the resting position.

The present invention has many advantages. It provides a simple device that can be easily handled with one hand. This can be either the left hand or the right hand. Since the spring brings around the supporting members into the receiving position of the supporting means, it is easily possible to place a fresh egg that is to be opened on the device and to handle the device with only one hand. This is not possible with the egg openers from the prior art. A laborious opening of the device is not necessary to put an egg therein.

According to the present invention the resting position is the position where the device is in the non-operative state. In this position the device is ready to receive a fresh egg to be opened. Therefore, this position can also be called the receiving position or the idle position.

When the device is in the resting position and a fresh egg is placed on the supporting members. Each end of the egg is held by a respective supporting member whilst the middle section of the egg may be unsupported.

The working position according to this invention is an egg opening position. This is the position suitable for opening the shell of an egg.

In a preferred embodiment, when the device is in the working position, both supporting members contact each other at least in a central section, where the eggshell is in contact with the supporting members. This is a contact section of the supporting members. In this position, one end or even both ends of an egg can be unsupported by the supporting means, while the middle part of the egg is supported.

To open an egg, the user puts an egg in the device and brings the supporting members into the working position against the resilient force of the spring means. After cracking the eggshell, the operator can therefore separate the eggshell parts by carefully releasing his force on the device resulting in an opening movement of the supporting members and the egg.

With devices from the prior art this is not as easy, because the operator has to exert force on different parts to separate the opened eggshell parts while paying attention that the content of the egg is not spilled. With the present invention usage is much easier and spillage is avoided.

In a preferred embodiment both supporting members are spaced apart in a central section, where an egg contacts the supporting members, when the device is in the resting position.

In an advantageous embodiment of the invention, the supporting members are connected with each other. Preferably the supporting members are connected with each other at or near the two opposite ends.

Preferably the supporting members function with respect to each other by means of a pivot. Preferably two pivot points are provided; one at or near either end of each supporting member. The connection can be provided by any means known in the prior art. The usage of a riveted joint or a comparable connecting member like a screw or the like is preferred.

When the two supporting members function by means of a pivot, then the movements of the supporting members may be described as a spherical/oval body. This is an advantageous shape to support a eggshell.

Preferably the supporting members have a bent shape in a mounted state. Preferably the basic structure of each supporting member in an unmounted state has the form of a flat strip with a generally rectangular shape, although there may be provided protrusions and recesses. Preferably it is at least partly made of metal.

In an advantageous embodiment a central section of the supporting member is connected to the spring means. This central section is the contact section, where an egg to be opened contacts the supporting members.

In a preferred embodiment the device can comprise control members for operating the supporting means. One, two or more control members may be provided. Preferably two control members are provided, one on either side of the device adjacent to a corresponding supporting member. Each control member is preferably structured to be operated by a finger of the operator.

The spring means may comprise one, two, three, four or more spring members. Each spring member can at least partly be of a spring coil type.

Preferably a handle means is provided. The handle can serve as a grip. It can be used to carry the device. When opening an egg it may be used to support the palm of hand. According to a preferred embodiment the spring means are at least partly formed by the handle means. The handle or grip and the spring means maybe of any suitable material and structure. Preferably at least part of the spring means and/or the handle are made of a metal wire.

Preferably the egg opener comprises breaking means to break the egg shell comprising at least one breaking member and/or at least one piercing member and/or at least one cutting member and/or at least one spike member and/or at least one tooth. An opening of an egg can also be accomplished by tapping the egg on a separate object that is equipped with some sort of breaking means. It is also possible that one or more piercing members or the like and one or more cutting members or the like are provided.

Preferably the breaking means with the breaking members are provided at one or both supporting members. The breaking members are preferably located at both supporting members at least in the central contact section. Preferably spike members are provided on the device, preferably on both supporting members. In an advantageous embodiment two, three or four small spikes or teeth are provided at the end of each supporting member.

The handle consists preferably at least partly of at least one piece of wire. The wire can be bent. The handle can also be a solid block. It can also consist of a solid part and of some bent wire pieces.

In a preferred embodiment at least one lateral arm is provided at a lateral side of the device. Preferably one lateral arm is provided at each side. Preferably each lateral arm is connected to the adjacent supporting member and also connected to the spring means. In a preferred embodiment the lateral arms are part of the spring means. The lateral arms may also be connected to the central handle. The lateral arms and the central handle may be made of a single piece of wire. It is also preferred that the lateral arms and the control members are made of one single piece.

In another simple embodiment the egg opener comprises a supporting means consisting of two supporting members which function on a pivot. One spring or more springs may be provided that act on one or both of the swivel joints to urge the supporting members in a resting position, where the contact sections of the supporting members are spaced apart from each other. The spring or the springs can be provided directly on the pivot axes. In a preferred embodiment no handle is present. Further there is no control member and no lateral arm.

In a preferred embodiment of all described embodiments a holder may be provided, upon which the egg opener can stay when the device is not in use. The holder is preferably at least partly made of some plastic material. It can also be made of metal or of a natural material, as e.g. of stone or wood.

The holder maybe used as a device upon which the egg opener is tapped to crack the shell of an egg.

It is to be herewith noted that the juxtaposing of the collaborative functioning of individual features according to the present invention is preferable in any optional combination as desired. Particularly preferred are also those feature combinations disclosed through omission of one or more features in the independent and dependent claims.

It is deemed obvious to the expert skilled in the art that the present invention would encompass a plurality of further conceivable modifications and realizations above and beyond the embodiments described here. The present invention is specifically not restricted only to those forms and examples of embodiments as represented herewithin.

Further advantages, features and application possibilities of the present invention will now be specified in the following description of an embodiment in connection with the enclosed drawings, which show:
- Fig. 1: a top view of an embodiment according to the present invention;
- Fig. 2: a front view of a supporting member;
- Fig. 3: a side view of the supporting member of Fig. 2, and
- Fig. 4: a top view of the handle.

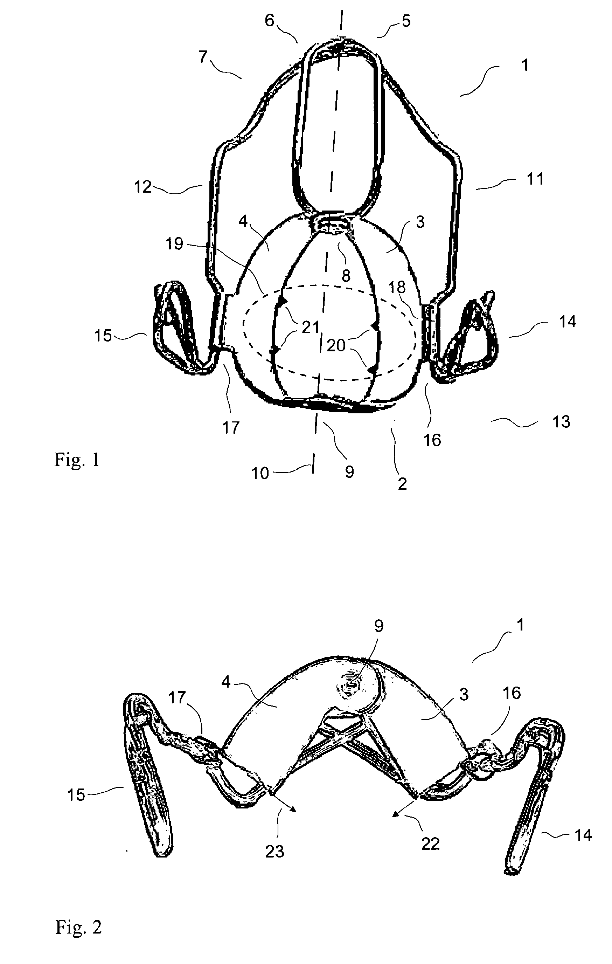

An embodiment of the present invention will now be described with reference to Figs. 1 to 4.

In figure 1 an egg opener 1 is shown in a top view having a supporting means 2 consisting of two supporting plates 3 and 4. A handle 5 with a grip portion 6 is provided. The handle consists of a bent wire that also serves as a spring 7 that biases supporting plates 3 and 4 in the resting position shown in figure 1, wherein the contact areas at contact section 18 of supporting plates 3 and 4 are spaced apart.

The supporting plates 3 and 4 are connected with each other by riveted joints 8 and 9. A central axis 10 extends through joints 8 and 9. In the top view both sides of the central axis 10 are symmetrical.

Lateral arms 11 and 12 are provided on the right and left hand side of the handle 5. At the front side 13 of the egg opener the lateral arms 11 and 12 form control members 14 and 15. These control members 14 and 15 are operated by the fingers (thumb and middle finger) of a user. Lateral arms 11 and 12 are connected pivotably at locations 16 and 17 to supporting plates 3 and 4 at a central section 18 of the supporting plates.

An egg 19 is indicated in figure 1. It is oriented perpendicular to the central axis 10. The eggshell is broken by small spikes 20 and 21 of supporting plates 3 and 4.

In figure 2 a front view of the egg opener 1 is shown. By actuating control members 14 and 15 supporting plates 3 and 4 are pivoted about central axis 10 through riveted joint 9 and the inner edges of the supporting plates 3 and 4 move towards each other along the direction of arrows 22 and 23 until they contact each other in the working position.

At the central section 18 each lateral arm 11, 12 is connected to a supporting plate 3, 4. There are also the control members located. The control members can be controlled by the fingers of the user. When held with the right hand control member 15 is actuated by the middle finger of a user and control member 14 by the thumb, while the index finger usually is lying on the riveted joint 9.

The lateral arms are pivotably connected to the supporting members.

When applying force to both control members then the supporting members are pivoted about their pivot axis extending along a central axis of the supporting means. Because of the pivoting movement the distance in a central section of the supporting elements becomes less and less while the operating force of the person handling the device is slightly increased. The operating force overcomes the force of the spring, until both supporting members contact each other in the working position.

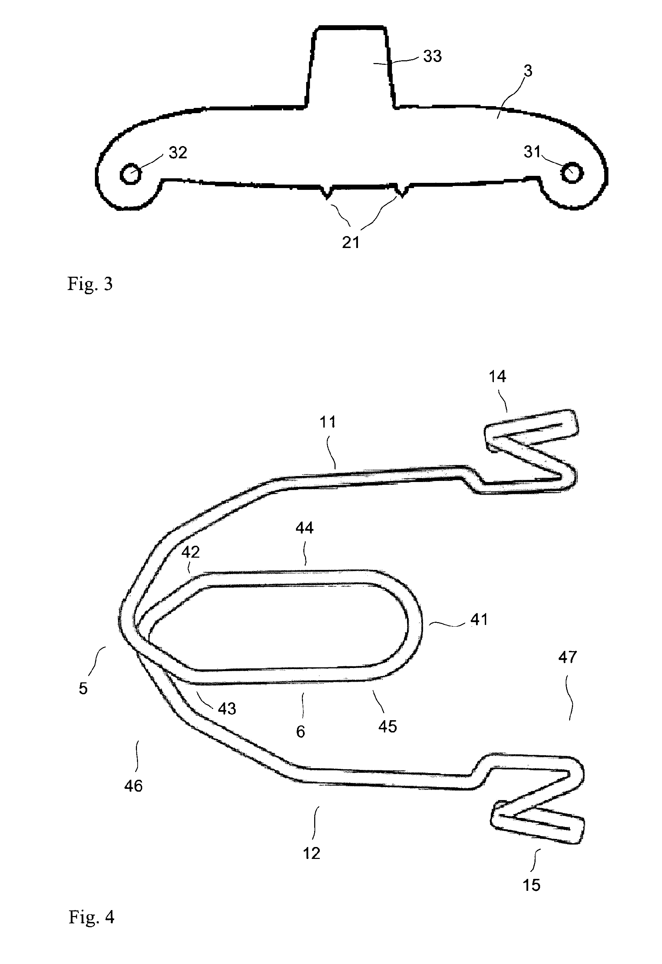

In figure 3 a supporting plate 3 is shown in an unmounted state. Holes 31 and 32 are provided, where the two supporting plates are pivotably connected with riveted joints 8 and 9. At the lower side of the supporting plate two spikes 21 are located. Before mounting of the plate they are bent about 90°, so that they are perpendicular to the plate itself and that they are suited to crack an egg.

Strip 33 is also bent 180° when mounted and receives pivotably one of the lateral arms 11 and 12.

Figure 4 shows central handle 5 in a plan view. The handle 5 comprises a grip part 6, lateral arms 11 and 12 and control members 14 and 15. In this embodiment the central handle may be completely made of metal wire.

The grip part 6 has in general a shape of a long U when seen from above. The U-turn section of the "U" is connected to pivoting joint 8 to increase the overall stiffness.

At the ends 42, 43 of the "U" both legs 44, 45 are bent downwards and towards each other, such that they cross each other. Both wires are bent again backwards forming lateral arms 11, 12 on both sides. Both (left and right) lateral arms 11 and 12 extend from the rear section 46 of the handle to the front section 47. Each lateral arm is connected to a respective supporting plate at a central section 18 of the supporting means.

The lateral arms 11 and 12 are somehow parallel again to the legs 44, 45 of the handle 5 and to the central axis 10 of the supporting means.

The function of the device will be described now with reference to the figures. To open an egg 19 the user places the egg horizontally on the supporting plates 3, 4 of the egg opener 1. He holds the egg 19 in place in the egg opener 1 with the palm of the hand. At the same time he exerts pressure with the thumb on the first control member 14 and with the middle finger of the holding hand on the second control member 15. By doing this the egg 19 is firmly held in a defined position in the device 1 free from play. A wobbling or any other movement of the egg is prevented. This is advantageous, since an uncontrolled breaking of the eggshell is avoided.

To crack the eggshell the user then slightly taps the device 1 with the egg on some appropriate object to open the egg. The small spikes 20 and 21 at the contact area 18 of the supporting plates 3 and 4 are then forced into the eggshell 19 and the egg shell breaks.

After this is accomplished the user simply has to carefully release the grip on the device 1 and the two parts of the eggshell are separated by the force of the spring 7 that urges the supporting plates 3, 4 into the resting position, where the contacting areas of the supporting plates 3, 4 have a maximum distance from each other. The content of the egg is meanwhile dropped to an appropriate container while it being possible to separate the york from the egg white.

The person operating the device only needs one hand to put a fresh egg into the device and to open it safely.

Egg shell debris mixing with the egg content is avoided and eggshell debris does not occur. The entire operation can be completed within two or three or at least a few seconds.

After completion of opening of an egg, the egg opener can be placed upon a holder, that can also be used as a tapping object. The design and the geometry may vary. In an embodiment the diameter of the wire of handle 5 is between 2 and 4 at about 3.2 mm. The overall length and width is adapted to the seize of the eggs to be opened.

Use of the invention is not restricted to hen's eggs. It can also be used with all kind of other eggs that need to be opened. Depending on the type of egg the dimensions of the device may vary accordingly.

Preferably the wire is made of metal and most preferably of stainless steel. But parts or the whole device can also be made of plastic. The holder can be made of any suitable material, like metal, plastic, wood, or stone. It can also be made of a combination of these materials.

## Claims

1. Egg Opener
with a supporting means comprising at least two supporting members and at least a spring means,
**characterized in that**
the supporting members are pivotable between a resting position and a working position,
and that the spring means biases the supporting means into the resting position.

2. Egg Opener according to claim 1,
wherein the supporting members are connected and preferably pivotably connected with each other.

3. Egg Opener according to claim 1 or 2,
wherein at least one control member is provided for operating at least one supporting member.

4. Egg Opener according to at least one of the preceding claims,
wherein the supporting members have a bent shape.

5. Egg Opener according to at least one of the preceding claims,
wherein a contact section of the supporting member is connected to the spring means.

6. Egg Opener according to at least one of the preceding claims,
wherein a handle means is provided.

7. Egg Opener according to at least one of the preceding claims,
wherein the spring means are at least partly formed by the handle means.

8. Egg Opener according to at least one of the preceding claims,
wherein breaking means are provided, preferably comprising at least one breaking member and/or at least one piercing member and/or at least one cutting member and/or at least one spike member.

9. Egg Opener according to at least one of the preceding claims,
wherein the breaking means are provided at the contact section of the supporting members.

10. Egg Opener according to at least one of the preceding claims,
wherein at least one lateral arm is provided that is preferably connected to the supporting member and maybe connected to the spring means.

11. Egg Opener according to at least one of the preceding claims,
wherein the spring means is provided at a pivotable joint connecting the supporting members.

12. Egg Opener according to at least one of the preceding claims, comprising a holder for support of the supporting means.
